Europäisches Patentamt

European Patent Office

Office européen des brevets

(19)

(11) Publication number: **0 131 772**
**B1**

(12) **EUROPEAN PATENT SPECIFICATION**

(45) Date of publication of patent specification: **20.05.87**

(51) Int. Cl.⁴: **H 02 P 8/00**

(21) Application number: **84106940.4**

(22) Date of filing: **18.06.84**

(54) **Circuit for detecting the failure of a step motor to respond to energization commands.**

(30) Priority: **15.07.83 IT 2209783**

(43) Date of publication of application:
**23.01.85 Bulletin 85/04**

(45) Publication of the grant of the patent:
**20.05.87 Bulletin 87/21**

(84) Designated Contracting States:
**DE FR GB**

(56) References cited:
**EP-A-0 046 722**
**US-A-4 107 593**
**US-A-4 336 484**

(73) Proprietor: **HONEYWELL INFORMATION
SYSTEMS ITALIA S.p.A.
Via Martiri d'Italia 10
I-10014 Caluso (Torino) (IT)**

(72) Inventor: **Ferrari, Gianpietro
Via Grioli 14
I-20161 Milano (IT)**

Courier Press, Leamington Spa, England.

## Description

The present invention relates to a circuit for detecting the failure of a step motor to respond to energization commands.

It is known that step motors are widely used in all those electromechanical applications where incremental displacements of movable elements are required.

They are particularly used in high speed printers.

It is also known that such kind of motors can be controlled by open loop control systems or closed loop control systems.

The closed loop control systems comprise sensing means coupled to the rotor of the motor which means supply a feedback signal.

Among the sensing means tachometric dynamo and photodisks can be mentioned.

The photodisks can supply speed and position signals and therefore enable to easily detect whether a step motor responds or not to the energization commands it receives.

Also in the case of tachometric dynamo, the signal generated by such means enable to detect whether a step motor responds or not to the energization commands it receives.

US Patent n. 3,896,363 discloses, for instance, a feedback circuit which uses a tachometric dynamo for detecting whether a step motor responds or not to the energization commands.

However, the high costs of closed loop control systems make more and more frequent the use of open loop control systems which do not require sensing means.

It would be desirable to supply these control system too with means able to detect the failure of step motors to respond to energization commands.

For instance, in a serial printer, the step motors are used both to move the printing carriage along the printing line and to advance or feed the printing support.

The failure of the motors to respond to energization commands, which may be due to anomalous resisting torques, causes inconvenients such as the printing of overlapping characters in the same printing position or the printing of several overlapping rows along the same line of the printing support.

Generally such inconvenients are detected afterwards by the printer operator or by the printer itself at preestablished instants.

For instance, the serial printers are generally provided with microswitches with end/beginning of the printing carriage stroke.

The reckoning of the energization commands sent to the printing carriage motor enables to establish, at the end of a carriage stroke detected by the microswitch, whether the commands sent to the motor have been in the right number to perform the whole stroke or in a higher number.

In the second case an anomaly is detected.

The limitations of such approach are clear.

On the contrary, it is advisable to detect the lack of response of a step motor in real time, that is when the uncorrect operation occurs.

The scope of the present invention is to overcome such limitations by supplying a circuit for detecting the failure of a step motor to respond to energization commands.

Such circuit can be used in open loop control systems and supplies a error signal in real time.

The ground of the circuit object of the invention is that the time constant of an energized phase of the motor depends on whether the motor is moving or not owing to energization commands and it is shorter when the motor, for any reason, is locked.

According to the invention the circuit comprises a timer for generating a prefixed and suitably chosen reference time period.

Such period is compared with the time interval required by the phase current to reach a preestablished level, and, if it is longer is indicative of an anomalous working of the motor.

These and other features of the invention will appear clearer from the following description of a preferred embodiment of the invention and from the enclosed drawings where:

Fig. 1 shows, in exemplifying schematic form, a step motor control system known in the art.

Fig. 2 shows the electrical diagram of a first preferred embodiment of a circuit for detecting the failure of a step motor to respond according to the invention.

Fig. 3 shows in timing diagram the operation of circuit in fig. 2.

Fig. 4 shows a possible modification of circuit in fig. 3.

Fig. 5 shows a second preferred embodiment of the detecting circuit according to the invention which is partially integrated in a step motor control system.

Fig. 6 shows the operative logical flow of the circuit and the system of fig. 5.

Before describing in detail the embodiment of the invention it is advantageous to discuss in a general way, the open loop driving systems for step motors used in the art.

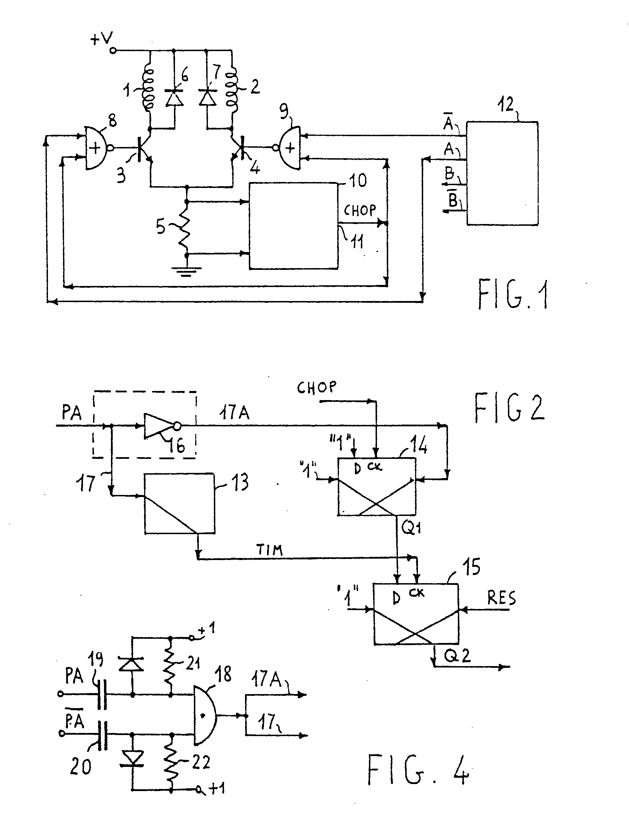

Fig. 1 shows, for sake of example, the essential features of such driving systems.

In fig. 1, for sake of simplicity, two phases of a step motor, generally provided with 4 phases, are indicated with reference number 1 and 2.

A phase terminal is connected to a constant voltage source $+V$ and the other one is connected to the collector of a transistor 3, 4 respectively.

Transistor 3, 4 emitter is connected to ground through a low value resistor 5.

A recycle diode 6, 7 connect the collector of transistor 3, 4 respectively, to voltage source $+V$.

The base of transistor 3, 4 is respectively connected to the output of a NOR gate 8, 9 respectively.

The inputs of a comparator/timer 10 are connected to the ends of resistor 5. Such comparator/timer provides a logical "0" signal on output terminal 11 if the voltage drop detected on resistor 5 is lower than a preestablished value $V_1$.

When such voltage becomes equal or greater than $V_1$ comparator 10 output rises to 1 and remains at 1 for a preestablished time T.

Output 11 of comparator 10 is connected to an input of NOR gates 8, 9.

A second input of NOR gates 8, 9 is respectively connected to outputs A, $\bar{A}$ of a control logic unit 12.

Such unit generates some phase energization commands, having a preestablished duration and suitable sequence, on its outputs A, $\bar{A}$ and on corresponding outputs B, $\bar{B}$.

For instance, when A falls to logical level 0 and no current flows within phase 2 (output 11 at 0) transistor 3 is switched on and a current starts to flow within phase 1 and resistor 5.

When the current, increasing with exponential law, reaches a level $I_0$ such that $I_0R=V_1$ (where R is resistor 5 resistance) output 11 rises again to 1 and transistor 3 is switched off.

The current flowing within phase 1 flows through diode 6 and decreases for a time period T; at the end of such period transistor 3 is switched on again and the current starts again to increase.

When output A rises to logical level 1 the current within phase 1 decreases so as to become nul.

At the same time phase 2 can be energized by applying a logical level 0 to output $\bar{A}$.

The circuit disclosed in fig. 1 is an exemplifying one and several changes may be brought to it provided the following features of the circuit in fig. 1 are maintained:

1° A current detector circuit is always present in the energized phases supplying a signal output, when the current reaches a preestablished level.
   In the following such signal will be named CHOP as its function is the one to interrupt or carry out a CHOPPING of the current flowing within the phases.
2° Some current recycle paths are always present which enable the dropping of the current flowing in a phase.
3° A phase control circuit is always present which generates a suitable phase control command train, hereafter named PA, P$\bar{A}$, PB, P$\bar{B}$.

After these premises fig. 2 can be considered which shows a preferred embodiment of the invention.

Circuit in fig. 2 comprises a NOT 16, a univibrator 13 and two D flip-flops 14, 15.

It receives from the control system shown in fig. 1 or from any equivalent system, the phase control signal PA and the signal CHOP interrupting the current flowing in the same phase.

Univibrator 13 receives signal PA, through lead 17, on its trigger input and its output is connected to the clock input (CK) of flip-flop 15.

Besides to univibrator 13, signal PA is applied to the reset input of flip-flop 14 through NOT 16 and lead 17A.

Flip-flop 14 receives signal CHOP at its clock input (CK) and its input D is prematurely at logical level "1" as well as its preset input.

Direct output Q of flip-flop 14 is connected to input D of flip-flop 15 whose preset input is permanently at logical level 1.

Univibrator 13, when activated by a logical/electrical transition from 1 to 0 drops its output, normally at level 1 to level 0, for a preestablished time.

Such kind of univibrator is available on the market as integrated circuit with code 9602.

Flip-flops 14 and 15 may be of the kind available on the market as integrated circuit with code 74S74.

The signal present at such flip-flop input D is transferred to output $\bar{Q}$ when a transition from 0 to 1 is applied to the clock input and the preset and reset inputs are at "1".

Lowering to "0" the signal present at preset and reset inputs respectively, the flip-flops can be respectively preset and reset.

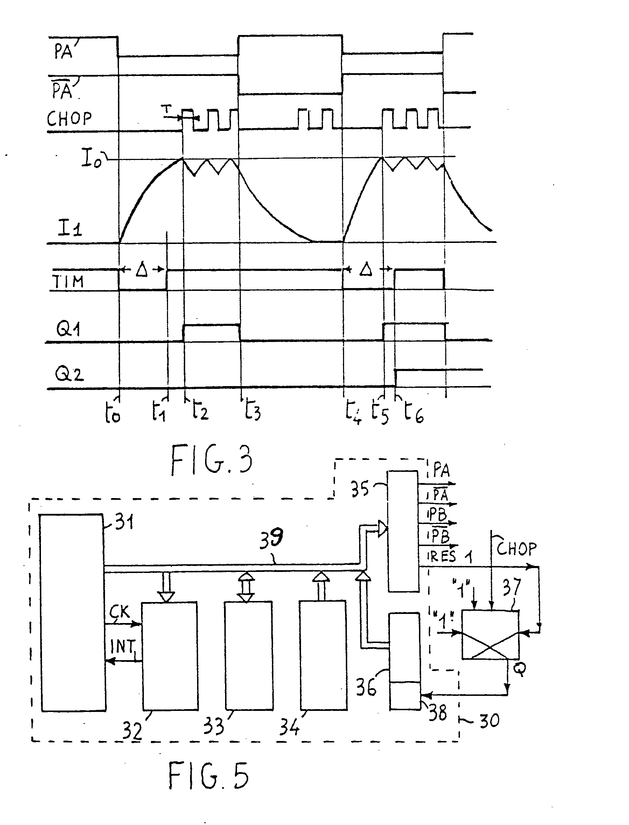

Fig. 3 shows in timing diagram the operation of circuit of fig. 1.

Firstly the circuit is at rest and the step motor rotor is still in a preestablished position.

If at instant $t_0$ phase 1 is energized signal PA drops to logical level 0 (diagram PA).

A current starts to flow in phase 1 (diagram $I_1$).

Meanwhile the univibrator is triggered and signal TIM, present on its output, falls to level 0 (diagram TIM).

After a certain time interval $\Delta$, that is at instant $t_1$, the univibrator output rises to level 1.

Univibrator 13 period is suitably chosen as to be shorter than the time required by the current flowing in phase 1 to reach chopping level $I_0$ (comparator 10 intervention level) when the motor correctly answers to the command, that is when the reluctance of the magnetic circuit linked with the energized phase 1 decreases owing to the rotation of the rotor which tends to line up a rotor magnetic pole with the magnetic pole of the energized phase.

It is clear that a reluctance decrease of the magnetic circuit linked with phase 1 involves an inductance increase in phase 1 and, therefore an increase of its time constant.

Therefore, in the average, the time constant of phase 1 is higher when the rotor is moved by phase 1 energization than when the rotor cannot rotate owing to high frictional torques.

In case of right operation, phase 1 therefore reaches the current level $I_0$ at an instant $t_2$ subsequent to $t_1$.

At instant $t_1$ signal TIM in output from univibrator 13 rises to 1 and a rising edge is applied to the clock input of flip-flop 15.

If the motor correctly responds to the command, flip-flop 15 status is not modified, that is it stays in reset because a signal $\bar{Q}_1=0$ is present at its input D.

At instant $t_2$ signal CHOP rises to level 1 (diagram CHOP) and flip-flop 14 is set.

This does not affect flip-flop 15 because the clock edge, corresponding to TIM rising to level 1, has been already received at instant $t_1$.

At instant $t_3$ phase 1 is de-energized, that is signal PA rises to logical level 1.

Correspondingly flip-flop 14 is reset.

An interval $t_3$—$t_4$ follows where phase 1 is still de-energized and a different phase may be energized, for instance phase 2, (see diagram $\overline{PA}$).

It is to be noted that during such interval flip-flop 14 stays in reset though signal CHOP rises to 1.

At instant $t_4$ phase 1 is energized again and supposition is now made that motor stops, that is it fails to respond to the command, owing to frictional torques.

In this case current level $I_0$ is reached at an instant $t_5$ in an interval time $t_4$—$t_5$ shorter than period $\Delta$ of univibrator 13.

Therefore at instant $t_5$ signal CHOP rises to logical level 1 and flip-flop 14 is set (diagram $Q_1$).

At instant $t_6$ subsequent to $t_5$ signal TIM, in output from univibrator 13, rises to 1 and, correspondingly flip-flop 15 is set (diagram $Q_2$). Output $Q_2$ rises to 1 and generates an error signal which can be sent to the control system to stop the motor energization.

Then flip-flop 15 can be reset by a reset command RES sent by the control system.

Circuit of fig. 2 detects the failure of the motor to respond to activation commands of one phase, which is adequate because the incremental operations required by the motor generally involve one or more cyclical energization of all the motor phases.

It is however clear that the circuit can be modified for detecting the failure of the motor to respond to activation commands at any phase and according to energization methods used.

For instance a classic energization method of a four phase motor is the one to alternately energize two phases with two mutually exclusive signals such as PA and $\overline{PA}$ of fig. 3.

Other two phases are energized in a mutually exclusive way with a phase angle of 90° and 270° respectively as to phase 1.

In this case it is possible to make the circuit of fig. 2 responsive to command signals both of phase 1 and of phase 2.

Fig. 4 shows the required modifications for circuit of fig. 1.

The modification are only the ones within the outlined block.

In this case both signals PA and $\overline{PA}$ are applied to two corresponding inputs of an AND gate 18 through capacity 19 and 20 respectively.

The inputs of AND gate 19 are normally kept at logical level 1 by a pull up resistor 21, 22 respectively.

Each of them temporaneously falls to 0 when the corresponding signal PA or $\overline{PA}$ falls to 0.

A diode in parallel with the resistors, having the anode connected to the inputs, prevents AND gate 18 inputs from rising to voltage levels higher than the polarization voltage at the positive edges of signals PA, $\overline{PA}$.

AND gate 18 output is connected to leads 17 and 17A and when PA or $\overline{PA}$ falls to 0, it activates univibrator 13 and reset flip-flop 15.

In case of mutually exclusive energization of more than two phases, the circuit of fig. 4, with obvious modifications, can be applied to all the phases energized in a mutually exclusive way.

Further the circuit object of the invention can be largely "integrated" within the control logic of the motor.

Fig. 5 shows in schematic block form such kind of embodiment.

In fig. 5 a control logic 30 generates signals PA, $\overline{PA}$, PB, $\overline{PB}$ necessary for the motor energization.

The control logic comprises a microprocessor 31, a programmable timing unit 32, a working memory 33, a control memory 34, an output register 35 and an input register 36.

The control logic elements are connected through a channel or BUS 39 which enables them to communicate.

Programmable timing unit 32 consists of a counter which may be preset or loaded with a preestablished reckoning value through BUS 39.

Counter 32 counts down owing to fixed frequency clock pulses CK received from microprocessor 31.

When counter 32 reaches the reckoning value 0, sends an interruption signal INT to microprocessor 31.

On reception of such signal microprocessor 31 activates an interruption handling microprogram.

A well known method to use the disclosed control logic to control a step motor is the one to execute a microprogram which loads, at a certain instant, the programmable timing unit with a certain reckoning value and, straight after (or before) the output register 35 with a suitable code.

The code may be indicative of the motor phases which must be energized.

In other words, some outputs of register 35 generate the phase energization control signals PA, $\overline{PA}$, PB, $\overline{PB}$.

The information required to establish the binary code is obviously obtained from the executed microprogram.

The duration of signals PA, $\overline{PA}$, PB, $\overline{PB}$ is established by timing unit 32.

When the timing unit emits the interruption signal INT microprocessor 31 activates again the control microprogram of the motor, loading output register 35 with a new code and loading again timing unit 32 with a suitable reckoning value.

With such kind of system, that is by loading unit 32 with suitable and variable reckoning value, phase energization commands can be generated of variable length and in a suitable sequence; it is therefore possible to control the acceleration, deceleration speed and direction of rotation of the motor.

With the addition of few elements control logic 30 is able to detect the failure of the motor to respond to phase commands.

Particularly, one flip-flop 37 external to logic 30 suffices.

Such flip-flop carries out the same function performed by flip-flop 14 of fig. 2.

The function carried out by univibrator 13 and by flip-flop 15 of fig. 2 is, in this case, performed by timing unit 32 and by a cell 38 of the input register 36 respectively.

The energization command duration D is obtained as sum of two time intervals $\Delta$ and D—$\Delta$ respectively generated by unit 32.

This allows timing unit 32 to jointly establish the energization command duration and the instant delayed, as to the beginning of a phase energization command, when it is to be verified whether the phase current has reached or not a preestablished value.

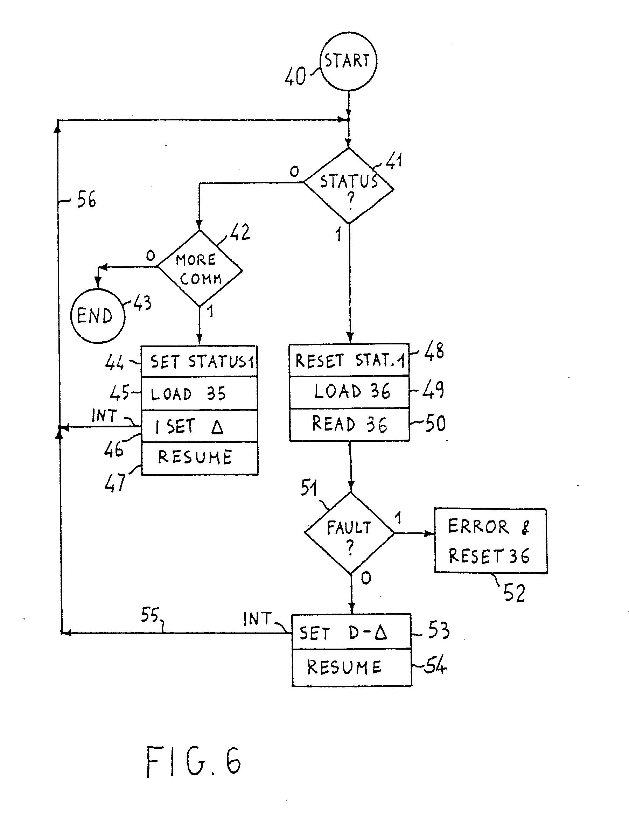

Fig. 6 shows in logical flow diagram the operation of the control logic of fig. 5.

Microprocessor 31 activates a motor control microprogram (block 40) in order to control the motor.

It firstly verifies a status register content where an information is loaded indicating whether timing unit 32 is measuring time interval $\Delta$ (STATUS 1) or time interval D—$\Delta$ (STATUS 0).

Such operation is shown by block 41.

It is clear that, at the beginning of the process, the information is 0.

Whether phase commands are to be generated or not (block 42 "MORE COMM") is then verified.

This check is essential to stop the motor control process when the motor is stopped.

If no phase command are to be generated the motor control process stops and recalls other processes (block 43).

Otherwise a status register is loaded with the information STATUS 1 (block 44), register 35 is loaded with a code indicative of which phase (or phases) must be energized, the code further supplying flip-flop 37 with a reset command RES 1 (block 45); unit 32 is loaded (SET $\Delta$) with a code indicative of time interval $\Delta$ and the unit itself is activated (block (46).

At this point the process is suspended and the system can go on to execute the control processes (block 47 RESUME).

When the time interval $\Delta$ elapses unit 32 generates an interruption INT which enables microprocessor 31 to execute again the already interrupted process, starting from block 41 (flow line 56).

The status of the system is verified and, since this is 1, (STATUS=1) the status is modified (block 48 RESET STAT 1).

The loading of register 36 with the information present at its inputs is then carried out (block 49—LOAD 36).

The input of cell 38 of register 36 is connected (fig. 5) to the output Q of flip-flop 37.

Flip-flop 37 is set by signal CHOP.

Therefore if signal CHOP rises to 1 before register 36 loading, cell 38 is loaded with an information at level 1, on the contrary with an information at level 0.

If cell 38 is loaded with a logical "1" this means that the motor did not respond to the already sent command and a failure is present.

After register 36 loading microprocessor 31 reads out the content of such register (block 50) and verifies if an error indication exists (block 51: FAULT?).

If the fault indication is present the process goes on to evidence such fault and register 36 is reset (block 52).

The failure indication can further activate some suitable processes.

If no fault indication is present the process goes on to load unit 32 with a code indicative of the time interval D—$\Delta$ and unit 32 is activated (block 53).

The process is then suspended and the system can recall other control processes (block 54).

When the time interval D—$\Delta$ is elapsed unit 32 generates a new interruption INT which allows microprocessor 31 to execute again the already described process starting from block 41 (flow line 55 and 56).

It is obvious that the codes loaded each time into unit 32 are preferably indicative of the time intervals $\Delta$ and D—$\Delta$ corrected as to take in account the execution time of the several phases of the control process.

It is further clear that the time interval $\Delta$ can constitute, in this case, a parameter variable according to the operative condition of motor, instead of a fixed value, so allowing an increase in the invention detecting circuit sensitivity by adapting the time discrimination to the different requirements.

However beyond the scope of the invention it may be useful to mention how an immediate fault indication can be used.

The most easy method is the one to stop the motor energization so avoiding possible persistent overloading, as well as to stop possible operation involving the rotor movement.

So, in the case of motors used in serial printers to control the printing carriage movement, printing operations can be stopped so avoiding the overlapping of several characters in the same printing position.

"Retry" processes can be also started.

In other words the rotation of the rotor in opposite direction can be ordered, if the opposite rotation succeeds the rotor can be brought to a known position.

At this point the rotation of the rotor can be commanded in the previous direction.

If the motor correctly responds to the commands and anomalous torques do not take place the printing can be started again from the point where the interruption occurred.

If the retry process performed one or more times, has a negative result the stopping of the printer can be commanded and the inconvenient can be pointed out to the operator who will provide in the most suitable way to its correction.

### Claims

1. Circuit for detecting the failure of a step motor to respond to energization commands, the motor being controlled by a control system comprising means (12) for selectively generating phase commands, means (5, 10) for detecting the energization current flowing within the energized phases and for supplying a current signal (CHOP) when such current reaches a prefixed value ($I_0$), characterized by that it comprises timing means (13, 30) activated at the beginning of the commands (PA) of a first phase at least and generating a timing signal (TIM) when a preestablished time ($\Delta$) after the activation of the timing means has elapsed, first bistable means (14, 37) set by said current signal (CHOP) and reset by a command (17A, RES1) emitted by said control system and detecting means (15, 30) for detecting if said first bistable means (14, 37) are set before the generation of said timing signals (TIM).

2. Circuit as per claim 1 characterized by that said detecting means consist of second bistable means (15) triggered by said timing signal (TIM) and set in a first status if said first bistable means (14) are set before said timing signal (TIM) occurs.

### Patentansprüche

1. Schaltungsanordnung zum Feststellen, ob ein Schrittschaltmotor auf ein Einschaltkommando nicht angesprochen hat, wobei der Motor von einem Steuersystem gesteuert wird, welches Mittel (12) zum selektiven Erzeugen von Phasenkommandos, Mittel (5, 10) zum Feststellen von Stromfluß durch die eingeschalteten Phasen und Mittel zum Erzeugen eines Stromsignals (CHOP) aufweist, sobald der Strom einen vorgebenen Wert ($I_0$) erreicht, dadurch gekennzeichnet, daß die Schaltungsanordnung einen zu Beginn der Kommandos (PA) wenigstens einer Phase aktivierten Zeitgeber (13, 30) aufweist, der ein Zeitsignal (TIM) erzeugt, wenn eine vorgegebene Zeit ($\Delta$) nach der Aktivierung des Zeitgebers abgelaufen ist; ferner eine erste bistable Einrichtung (14, 37) enthält, die vom genannten Stromsignal (CHOP) gesetzt und durch ein vom Steuersystem abgegebenenes Kommando (17A, RES1) zurückgesetzt wird, sowie einen Detektor (15, 30) umfaßt, der feststellt, ob die erste bistable Einrichtung (14, 37) vor der Erzeugung des Zeitsignals (TIM) gesetzt wurde.

2. Schaltungsanordnung nach Anspruch 1, dadurch gekennzeichnet, daß der Detektor aus einer zweiten bistabilen Einrichtung (15) besteht, die vom Zeitsignal (TIM) getriggert und in einen ersten Zustand gesetzt wird, falls die erste bistable Einrichtung (14) vor dem Auftreten des Zeitsignals (TIM) gesetzt wird.

### Revendications

1. Circuit pour détecter la défaillance d'un moteur pas-à-pas réagissant à des commandes d'excitation, le moteur étant commandé par un système de commande comprenant un moyen (12) pour engendrer sélectivement des commandes de phase, un moyen (5, 10) pour détecter le courant d'excitation passant dans les phases excitées et pour fournir un signal de courant (CHOP) quand ce courant atteint une valeur préfixée ($I_0$), caractérisé en ce qu'il comprend un moyen de synchronisation (13, 30) rendu actif au commencement des commandes (PA) d'une première phase au moins et engendrant un signal de synchronisation (TIM) quand un intervalle de temps préétabli ($\Delta$) s'est écoulé après le déclenchement du moyen de synchronisation, des premiers moyens bistables (14, 37) mis à un par le signal de courant (CHOP) et remis à zéro par une commande (17A, RES1) émise par le système de commande et un moyen de détection (15, 30) pour détecter si les premiers moyens bistables (14, 37) sont mis à un avant la génération du signal de synchronisation (TIM).

2. Circuit selon la revendication 1, caractérisé en ce que le moyen de détection est constitué d'un second moyen bistable (15) déclenché par le signal de synchronisation (TIM) et mis dans un premier état si les premiers moyens bistables (14) sont mis à un avant que le signal de synchronisation (TIM) soit présent.

FIG.1

FIG 2

FIG. 4

FIG. 3

FIG. 5

FIG.6